# FASCICULE DE BREVET EUROPEEN

(11) **EP 2 486 422 B1**
(45) Date de publication et mention de la délivrance du brevet: **23.04.2014**
(21) Numéro de dépôt: 10762661.6
(22) Date de dépôt: 04.10.2010
(51) Int. Cl.: G01S 7/02

(54) **PROCEDE DE CONTROLE D'UN INTERROGATEUR SOUMIS A DES COUPLAGES ELECTROMAGNETIQUES AVEC UN TERMINAL EMETTEUR**
VERFAHREN ZUR ÜBERWACHUNG EINES AN ELEKTROMAGNETISCHE KOPPLUNGEN GEBUNDENEN INTERROGATORS MIT EINEM ÜBERTRAGUNGSENDGERÄT
METHOD FOR MONITORING AN INTERROGATOR SUBJECTED TO ELECTROMAGNETIC COUPLINGS WITH A TRANSMITTING TERMINAL

(30) Priorité: 06.10.2009 FR 0904770
(43) Date de publication de la demande: 15.08.2012
(73) Titulaire: Thales, 92200 Neuilly Sur Seine (FR)
(72) Inventeur: TURCO, Thomas, F-92704 Colombes Cedex (FR); KLOPP, Thierry, F-92704 Colombes Cedex (FR)
(74) Mandataire: Labatte, Laurent
(86) Numéro de dépôt international: PCT/EP2010/064764
(87) Numéro de publication internationale: WO 2011/042397

(56) Documents cités:
- EP-A1- 0 445 028
- EP-A1- 1 686 394
- EP-A1- 2 043 284
- EP-A2- 1 189 073
- US-B1- 6 473 596

## Description

La présente invention concerne un procédé de contrôle d'un interrogateur, par exemple un interrogateur ami-ennemi, soumis à des couplages électromagnétiques avec un terminal émetteur, par exemple un terminal de radiocommunications. Elle s'applique notamment aux interrogateurs-transpondeurs, en particulier les équipements IFF embarqués sur des plates-formes multifonctions, par exemple des aéronefs, des navires ou des véhicules comprenant également des systèmes de radiocommunications.

Dans le domaine civil ou militaire, les interrogateurs et transpondeurs d'identification sont parfois utilisés à proximité d'équipements de radiocommunications, particulièrement lorsqu'ils sont installés sur des plates-formes de dimension réduite, telles que des avions de chasse par exemple. Cette proximité peut induire des couplages entre la ou les antennes des interrogateurs, d'une part, et la ou les antennes des équipements de radiocommunications, d'autre part. Aussi, le fonctionnement de l'interrogateur peut être perturbé si celui-ci fonctionne à une bande fréquence adjacente ou recouvrant, même partiellement, la bande de fréquence de fonctionnement du terminal de radiocommunications. L'interrogateur peut, par exemple, manquer la réception de réponses à des messages d'interrogation qu'il a lui-même émis. Réciproquement, l'équipement de radiocommunications peut également être perturbé du fait des émissions de l'interrogateur.

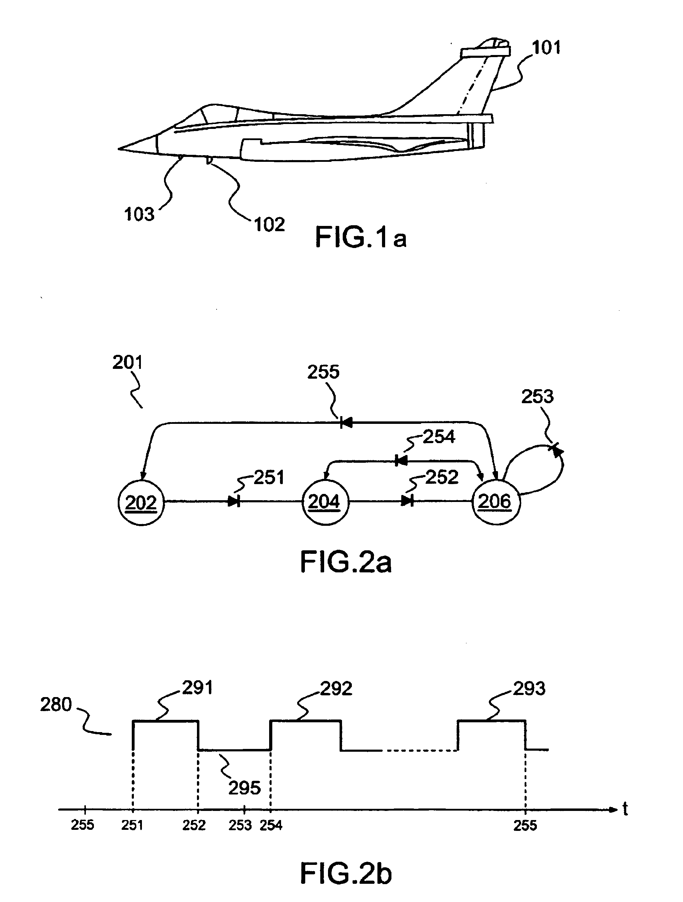

Un exemple de ce problème est illustré en figure 1. Un avion 101 comprend un terminal MIDS, acronyme anglo-saxon pour « Multifunctional Information Distribution System » signifiant système multifonction de distribution de l'information, et un interrogateur ami-ennemi, plus souvent désigné par le sigle anglo-saxon IFF pour « Identification Friend or Foe ». Le terminal MIDS est relié à une première antenne 102 disposée, du fait de l'exiguïté de l'avion, dans une zone soumise aux rayonnements d'une deuxième antenne 103, cette deuxième antenne 103 étant reliée à l'interrogateur IFF. Le terminal MIDS émet en évasion de fréquences dans des canaux présents sur une bande fréquence comprise entre 960 MHz et 1215 MHz tandis que l'interrogateur IFF émet à une fréquence centrée sur 1030 MHz et reçoit des réponses à une fréquence centrée sur 1090 MHz. Aussi, les bandes de fréquence de fonctionnement du MIDS et de l'interrogateur IFF se recouvrent et peuvent engendrer des erreurs de traitement au niveau de l'interrogateur.

Une première solution connue pour éviter les effets indésirables des couplages précités est d'ajouter un filtre réjecteur associé à un filtre présélecteur au niveau du récepteur IFF. Ce type de filtre réjecteur est difficile à réaliser et volumineux, donc difficile à intégrer sur une plate-forme existante, en particulier sur une plate-forme telle qu'un aéronef, disposant d'un espace réduit. Une deuxième solution connue est d'interdire l'émission du terminal MIDS pendant que l'interrogateur est en phase d'écoute des réponses aux interrogations émises. Cette deuxième solution dégrade les performances du terminal MIDS en perturbant son fonctionnement par hachage des messages émis. Plus le taux d'interrogations IFF est important, moins le terminal MIDS est opérationnel.

Une demande de brevet européen publiée sous le numéro EP1686394 A1 propose un procédé de couplage électromagnétique entre un radar et un équipement de radionavigation. Toutefois, la solution proposée ne permet pas de faire fonctionner concomitamment un interrogateur et un terminal de radiocommunications dont les bandes de fréquence se recouvrent au moins partiellement, sans perturber le fonctionnement du terminal de radiocommunications.

Un but de l'invention est de permettre à un interrogateur, par exemple un interrogateur IFF, subissant un couplage électromagnétique avec un terminal émetteur, par exemple un terminal de radiocommunications, de fonctionner correctement sans altérer les performances dudit terminal et sans nécessiter de transformations matérielles importantes. A cet effet, l'invention a pour objet un procédé de contrôle d'un interrogateur d'identification dont l'antenne subit un couplage électromagnétique préjudiciable avec une autre antenne reliée à un terminal de radiocommunications émetteur d'impulsions, une interrogation émise par ledit interrogateur prenant la forme d'impulsions, le procédé comprenant au moins les étapes suivantes :
■ transmettre à l'interrogateur un signal d'information indiquant au moins les périodes pendant lesquelles une impulsion peut être émise par le terminal de radiocommunications ;
■ contrôler l'émission d'interrogations ou l'écoute de réponses par l'interrogateur en fonction de l'état dudit signal d'information,
le procédé étant caractérisé en ce que si, pendant que l'émission d'une impulsion par l'interrogateur est en cours, l'émission d'un train d'impulsions par le terminal de radiocommunications débute et que cette émission par ledit terminal se termine après la fin de l'émission de l'impulsion par l'interrogateur, alors l'émission d'une autre impulsion par l'interrogateur est demandée.

Le signal d'information peut être un signal à deux états formant une enveloppe des émissions par le terminal, un état « émission » indiquant l'émission d'un train d'impulsions par le terminal de radiocommunications et un état « silence » indiquant qu'aucune impulsion n'est émise par ledit terminal.

Selon une autre mise en oeuvre du procédé selon l'invention, le signal est transmis sur un bus.

Selon une mise en oeuvre du procédé selon l'invention, si une émission d'impulsions est demandée à l'interrogateur pendant que le signal d'information indique l'émission d'un train d'impulsions par le terminal de radiocommunications, attendre la fin de l'émission dudit train d'impulsions pour déclencher l'émission de la rafale d'impulsions par l'interrogateur.

Selon une mise en oeuvre du procédé selon l'invention, pendant la phase d'écoute de l'arrivée de messages de réponses, si l'émission d'un train d'impulsions par le terminal de radiocommunications débute,
■ identifier comme peu fiables ou supprimer les éventuelles réponses reçues par l'interrogateur pendant la dernière période d'écoute,
■ attendre la fin de l'émission du train d'impulsions par le terminal de radiocommunications,
■ déclencher l'émission d'une nouvelle impulsion d'interrogation par l'interrogateur.

Selon une mise en oeuvre du procédé selon l'invention, l'écoute par l'interrogateur de l'arrivée de messages de réception est inhibée pendant que le signal d'enveloppe est à l'état « émission ». Cette mise en oeuvre du procédé selon l'invention permet d'éviter que la réception de messages de réceptions ne soit perturbée par l'émission concomitante d'impulsions par le terminal de radiocommunications.

Selon une mise en oeuvre du procédé selon l'invention, les impulsions sont émises par le terminal sur une bande de fréquence comprise entre 960 MHz et 1215 MHz, la fréquence des impulsions à recevoir par l'antenne du module étant égale à 1090 MHz.

Le terminal de radiocommunications peut être un terminal MIDS, le signal d'enveloppe étant le signal discret BTDMAMTR, pour « Bufferized Time Division Multiple Access Message TRansmission indicator » - parfois appelé aussi « TDMA Message Transmission Indicator » -, ledit signal étant fourni par ledit terminal MIDS.

Selon une autre mise en oeuvre du procédé selon l'invention, le terminal est un terminal de type « JTIDS CLASS 2H » dont le signal « JSPOUT » est utilisé comme signal d'enveloppe. Selon encore une autre mise en oeuvre du procédé selon l'invention, le terminal est un terminal de type « SHAR-SKW/JTIDS » dont le signal « TDMA_SUPR_OUT » est utilisé comme signal d'enveloppe.

L'invention a également pour objet un système comprenant un terminal de radiocommunications émetteurs d'impulsions relié à au moins une première antenne et un interrogateur relié à au moins une seconde antenne, lesdites antennes subissant un couplage électromagnétique mutuel, un câble transportant un signal d'enveloppe de l'émission des impulsions du terminal de radiocommunications étant connecté au dit interrogateur, lequel interrogateur mettant en oeuvre le procédé tel que décrit plus haut, l'interrogateur pouvant être un interrogateur IFF. Le système selon l'invention est par exemple embarqué sur un aéronef.

D'autres caractéristiques apparaîtront à la lecture de la description détaillée donnée à titre d'exemple et non limitative qui suit faite en regard de dessins annexés qui représentent :
- la figure 1, un exemple de configuration dans laquelle le fonctionnement d'un transpondeur-émetteur est perturbé par la proximité d'une antenne d'un terminal de radiocommunications ; cette figure a déjà été présentée plus haut ;
- la figure 2a, un diagramme d'états illustrant le fonctionnement autonome d'un interrogateur IFF ;
- la figure 2b, un chronogramme représentant des interrogations émises par un interrogateur ;
- la figure 3a, un diagramme d'états illustrant le fonctionnement d'un interrogateur selon une première mise en oeuvre du procédé selon l'invention ;
- la figure 3b, un premier chronogramme représentant des interrogations émises par un interrogateur dans le cadre du procédé selon l'invention ;
- la figure 3c, un deuxième chronogramme représentant des interrogations émises par un interrogateur dans le cadre du procédé selon l'invention ;
- la figure 3d, un troisième chronogramme représentant des interrogations émises par un interrogateur dans le cadre du procédé selon l'invention ;
- la figure 3e, un quatrième chronogramme représentant des interrogations émises par un interrogateur dans le cadre du procédé selon l'invention ;
- la figure 4, un diagramme d'états illustrant le fonctionnement d'un interrogateur selon une deuxième mise en oeuvre du procédé selon l'invention.

Dans un souci de clarté, les mêmes références dans des figures différentes désignent les mêmes éléments.

La figure 2a présente un diagramme d'états illustrant le fonctionnement autonome d'un interrogateur, par exemple un interrogateur IFF embarqué dans un aéronef et fonctionnant en mode pointé avec émissions de salves. Les états de l'interrogateur sont représentés sur la figure par des cercles, le passage d'un état à un autre est représenté par une ligne, et les événements sont représentés par des traits intersectant lesdites lignes.

L'interrogateur alterne entre trois états 202, 204, 206. Le premier état 202 correspond à l'attente d'une demande de déclenchement d'une rafale d'interrogations, le deuxième état 204 correspond à l'attente de la fin de l'émission d'une interrogation, et le troisième état 206 correspond à l'attente d'une réponse à l'interrogation précédemment émise.

La figure 2b présente un chronogramme représentant un signal d'enveloppe 280 des interrogations émises par un interrogateur. Dans l'exemple, une rafale d'interrogations comprend un nombre déterminé d'impulsions 291, 292, 293 séparées par des durées d'attente 295 d'une réponse, chaque impulsion 291, 292, 293 comprenant un message d'interrogation, par exemple un message d'interrogation en mode 1. A titre d'illustration, la durée d'une impulsion peut être égale à 1,1 ms et la durée d'attente peut être égale à 1,2 ms.

Initialement, l'interrogateur se trouve dans le premier état 202. Puis, un ordre à émettre des interrogations est reçu 251 par l'interrogateur : cet ordre est par exemple envoyé par le pilote de l'aéronef lorsqu'il souhaite émettre des messages d'interrogation. Une fois cet ordre reçu 251, l'interrogateur initialise une mémoire apte à contenir des messages de réponse, déclenche un compteur d'interrogations, émet une première interrogation et passe dans le deuxième état 204 d'attente de fin de l'émission de l'interrogation 291.

Lorsque l'émission de la première interrogation 291 est terminée 252, l'interrogateur passe dans le troisième état 206 d'attente d'une réponse.

Pendant que l'interrogateur est dans le troisième état 206, si une réponse est reçue 253, elle est mémorisée dans la mémoire initialisée lors de la réception de l'ordre 251 de déclenchement de la rafale d'interrogations. Puis, dès que le temps d'attente 295 est écoulé, le compteur d'interrogations est incrémenté, puis un test est effectué sur ce compteur pour déterminer si le nombre d'interrogations à émettre pendant la rafale a été atteint. Si le nombre d'interrogations émises est inférieur au nombre d'interrogations à émettre, l'interrogateur repasse 254 dans le deuxième état 204.

La boucle 204, 252, 206, 254 formée par l'enchaînement du deuxième état 204 et du troisième état 206 se répète jusqu'à ce que le nombre d'interrogations à émettre ait été atteint. Lorsque 255 le nombre d'interrogations à émettre a été atteint, l'interrogateur repasse dans le premier état 202 pour attendre un nouvel ordre de déclenchement d'une rafale d'interrogations.

L'interrogateur fonctionnant selon le diagramme d'états de la figure 2a peut être perturbé par l'émission voisine d'un signal électromagnétique dans des fréquences proches ou identiques à celles utilisées par l'interrogateur.

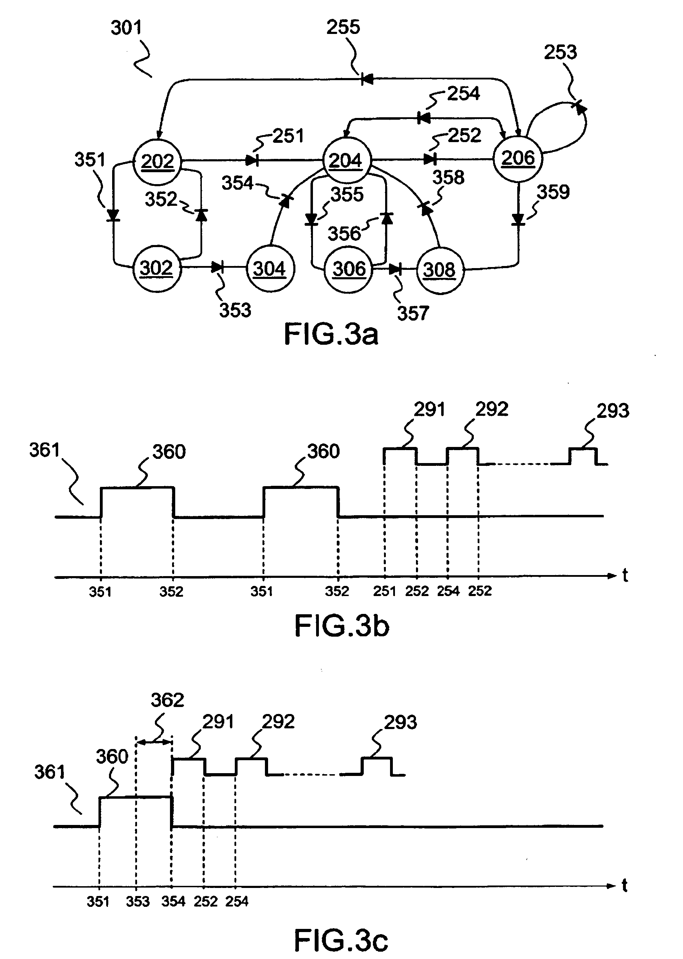

La figure 3a présente un diagramme d'états illustrant le fonctionnement d'un interrogateur IFF selon une première mise en oeuvre du procédé selon l'invention. Le diagramme 301 reprend les états 202, 204, 206 et les événements 251, 252, 253, 254, 255 déjà présentés en figure 2a, et comprend également de nouveaux états 302, 304, 306, 308 et de nouveaux événements.

Le terminal émetteur des ondes électromagnétiques perturbantes, par exemple un terminal de radiocommunications, et l'interrogateur sont reliés, de sorte que le terminal peut indiquer à l'interrogateur les périodes temporelles pendant lesquelles il émet et/ou pendant lesquelles il n'émet pas. Dans l'exemple, le terminal émetteur est un terminal MIDS, émetteur d'impulsions. Un signal d'enveloppe 361 (figure 3b) des impulsions est transmis à l'interrogateur, de sorte que ce dernier peut connaître les périodes 360 pendant lesquelles le terminal MIDS émet. Ce signal d'enveloppe est, dans l'exemple, le signal BTDMAMTR disponible en sortie du terminal MIDS. Plus précisément, le signal d'enveloppe BTDMAMTR indique des périodes temporelles pendant lesquelles le terminal MIDS est susceptible d'émettre, même si celui-ci n'émet pas nécessairement pendant toute la période indiquée.

Si une émission du terminal MIDS survient 351 pendant que l'interrogateur est dans le premier état 202, l'interrogateur passe dans un quatrième état 302. Ce quatrième état 302 est un état d'attente d'un ordre à émettre des interrogations pendant que le terminal MIDS est en train d'émettre des signaux radioélectriques. A titre d'exemple, une période d'émission du terminal dure 5 ms. Selon que l'émission du terminal MIDS cesse avant ou après la transmission d'un ordre à émettre des interrogations, le diagramme 301 prévoit des options différentes.

Dans un premier cas, le terminal MIDS cesse d'émettre 352 avant qu'un ordre à émettre des interrogations ne soit transmis à l'interrogateur. L'interrogateur repasse alors dans le premier état 202. Tant qu'aucun ordre à émettre n'est transmis à l'interrogateur, alors celui-ci peut donc alterner entre le premier état 202 et le quatrième état 302, au gré des émissions du terminal MIDS voisin.

Dans un second cas, un ordre à émettre des interrogations est transmis 353 à l'interrogateur avant que le terminal MIDS n'ait cessé d'émettre. L'interrogateur passe alors dans un cinquième état 304. Ce cinquième état 304 est un état d'attente de la fin des émissions du terminal MIDS pour déclencher l'émission des interrogations par l'interrogateur. Autrement dit, l'exécution de l'ordre transmis à l'interrogateur est retardée. Dès que le terminal MIDS a cessé d'émettre 354, les émissions d'interrogations peuvent débuter. Ainsi, la fin de l'émission du terminal MIDS entraîne les mêmes actions que celles provoquées par la réception 251 d'un ordre à émettre dans le premier diagramme d'états présenté en figure 2a : l'interrogateur initialise une mémoire apte à contenir des messages de réponse, déclenche un compteur d'interrogations, émet une première interrogation et passe dans le deuxième état 204 d'attente de fin de l'émission de l'interrogation 291.

Avec un interrogateur fonctionnant selon le diagramme d'états 301 de la figure 3a, il existe donc trois chemins possibles pour passer du premier état 202 au deuxième état 204 :
- soit le terminal MIDS n'émet pas et un ordre à émettre des interrogations est reçu 251 par l'interrogateur (dans ce cas, l'interrogateur fonctionne nominalement car aucune perturbation électromagnétique ne survient à ce stade) ;
- soit le terminal MIDS commence 351 puis cesse 352 d'émettre une ou plusieurs fois avant qu'un ordre à émettre ne soit reçu par l'interrogateur (dans ce cas, l'interrogateur passe dans le quatrième état 302, au cas où un ordre à émettre serait reçu par l'interrogateur) ; ce cas est illustré en figure 3b, le signal d'information 361 transmis par le terminal MIDS vers l'interrogateur comprenant des périodes d'émission représentés par des créneau 360 : il est à noter que les moments auxquels ces périodes d'émission 360 commencent sont, en général imprévisibles ;
- soit le terminal MIDS commence à émettre 351, puis un ordre est reçu 353 par l'interrogateur avant que le terminal MIDS ne cesse d'émettre 354 (ce cas correspond au retardement de l'émission de l'interrogation) ; ce cas est illustré en figure 3c, le retard 362 étant symbolisé par une double flèche.

Ainsi, les premier, quatrième et cinquièmes états 202, 302, 304 permettent de gérer l'interrogateur pendant la période 290 précédant l'émission de la première interrogation 291 de la rafale d'interrogations.

Une fois l'interrogateur dans le deuxième état 204 d'attente de fin d'émission de l'interrogation, si le terminal MIDS n'émet pas avant que l'émission de l'interrogation cesse 252, alors l'interrogateur passe dans le troisième état 206, comme décrit plus haut en figure 2a. A contrario, si le terminal MIDS commence à émettre avant que l'émission de l'interrogation ne soit terminée, alors l'interrogateur passe dans un sixième état 306.

Ce sixième état 306 est un état d'attente de la fin de l'émission de l'interrogation. Selon que l'émission du terminal MIDS cesse avant ou après la fin de l'émission de l'interrogation en cours, le diagramme 301 prévoit des options différentes. Il est à noter que l'émission simultanée d'un signal par le terminal MIDS et d'une interrogation par l'interrogateur n'est pas gênante en soi. Par contre, la phase de réception 295 de l'interrogateur peut être perturbée par une émission du terminal MIDS, ce qui est le cas, par exemple si cette phase de réception 295 débute alors que l'émission du MIDS n'est pas terminée.

Aussi, lorsque le terminal MIDS cesse d'émettre 356 avant que l'interrogation ne soit totalement émise, l'interrogateur repasse alors dans le deuxième état 204. Tant que l'émission de l'interrogation n'est pas terminée, l'interrogateur peut donc alterner entre le deuxième état 204 et le sixième état 306, au gré des émissions du terminal MIDS voisin pendant l'émission de l'interrogation.

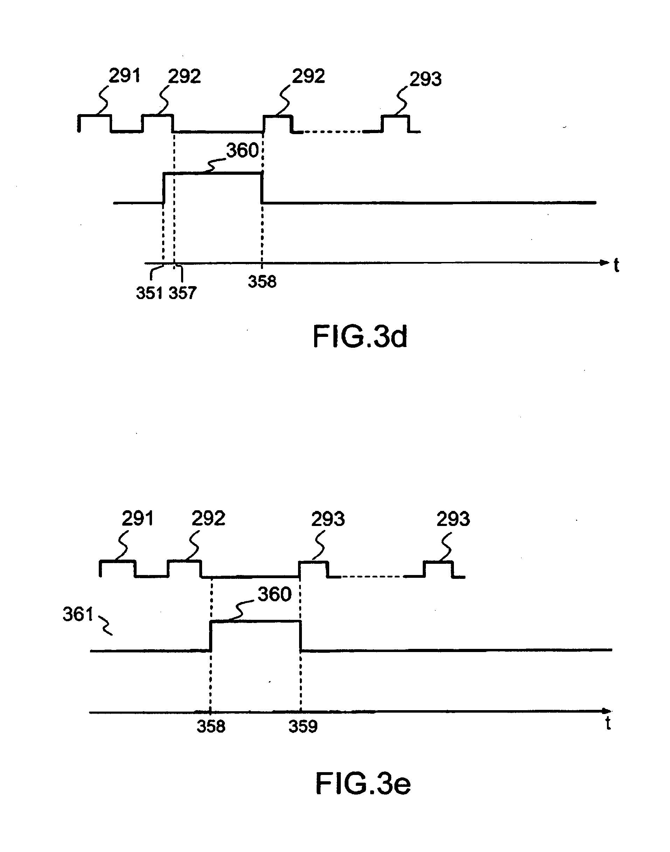

Par contre, si l'émission de l'interrogation cesse 357 avant que le terminal MIDS n'ait terminé son émission, alors l'interrogateur passe dans un septième état 308. Ce septième état 308 est un état d'attente de la fin de l'émission de l'émission du terminal MIDS ; il remplace dans ce cas le troisième état 206 d'attente d'une réponse. En effet, il est inutile d'écouter l'arrivée d'une nouvelle réponse tant que le terminal MIDS perturbe l'environnement électromagnétique. Dès que l'émission du terminal MIDS cesse 358, une nouvelle émission de l'interrogation est déclenchée et l'interrogateur repasse dans le deuxième état 204. L'interrogateur agit donc comme si la dernière interrogation n'avait pas été émise : le compteur d'interrogation n'est pas incrémenté. Ce cas est illustré en figure 3d, l'émission du terminal MIDS étant représentée par un créneau 360.

En effet, il serait risqué de commencer une phase d'écoute des réponses par l'interrogateur si l'émission de l'impulsion par le terminal de radiocommunications n'est pas encore terminée. A contrario, on peut noter que si l'émission par le terminal de radiocommunications se termine avant la fin de l'émission de l'impulsion par l'interrogateur, alors aucune action spécifique n'est engagée, car l'émission concomitante d'impulsions par le terminal de radiocommunications et par l'interrogateur n'est pas gênante.

Ainsi, les deuxième, sixième et septième états 204, 306, 308 permettent de gérer l'interrogateur pendant la période 291, 292, 293 d'émission d'une interrogation.

Une fois que l'interrogation a pu être émise sans que le terminal MIDS n'émette au moment où l'émission de l'interrogation a cessé, l'interrogateur passe dans le troisième état 206 déjà présenté en figure 2a. Là encore, il se peut que le terminal MIDS commence à émettre pendant que l'interrogateur attend l'arrivée d'une réponse à la dernière interrogation émise.

Si le terminal MIDS commence à émettre 359 pendant que l'interrogateur est dans le troisième état 206, les signaux de réponse éventuellement reçus 253 et mémorisés dans la mémoire prévue à cet effet sont effacés et l'interrogateur passe dans le septième état 308 pour que l'émission de la dernière interrogation soit répétée, de sorte qu'à l'issue 255 de l'émission de la rafale d'interrogations, aucune interrogation de la rafale d'interrogations n'a été perturbée par le terminal MIDS. Ce cas est illustré en figure 3e, l'émission du terminal MIDS étant représentée par un créneau 360.

Ainsi, les troisième et septième états 206, 308 permettent de gérer l'interrogateur pendant la période 295 d'attente d'une réponse.

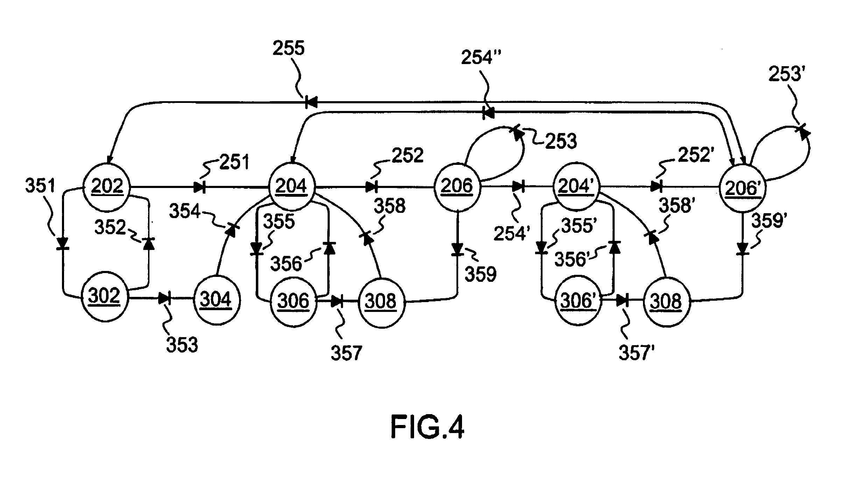

La figure 4 présente un diagramme d'états illustrant le fonctionnement d'un interrogateur selon une deuxième mise en oeuvre du procédé selon l'invention. Selon la mise en oeuvre illustrée dans la figure 4, l'interrogateur est apte à émettre des interrogations dans deux modes différents, par exemple le mode 1 et le mode 2.

Un interrogateur fonctionnant selon le diagramme d'états 401 de la figure 4 est apte à émettre une rafale d'interrogations avec une alternance entre une interrogation en mode 1 et une interrogation en mode 2 (par exemple seize interrogations avec huit interrogations en mode 1 et huit interrogations en mode 2).

Par rapport au diagramme 301 de fonctionnement de la figure 3, les deuxième, troisième, sixième et septième états 204, 206, 306, 308 sont répliqués respectivement en huitième état 204', neuvième état 206', dixième état 306' et onzième état 308' pour pouvoir gérer les interrogations en mode 2. L'interrogateur passe du premier état 202 au deuxième état 204 lorsqu'une demande d'émission d'une interrogation en mode 1 est transmise 251. Les deuxième, troisième, sixième et septième états 204, 206, 306, 308 concernent les interrogations en mode 1.

Lorsque l'interrogateur est dans le troisième état 206 d'attente d'une réponse de l'interrogation émise en mode 1, puis que la période d'attente est écoulée 254', alors l'interrogateur passe dans le huitième état 204' en émettant une interrogation en mode 2. Le huitième état 204' correspond alors à l'attente de la fin de l'émission de cette interrogation en mode 2. Les neuvième état 206', dixième état 306' et onzième état 308' correspondent au même mode de fonctionnement que celui décrit en figure 3a, à l'exception du moment où l'interrogateur est dans le neuvième état 206' et que le temps d'attente de la réponse à l'interrogation en mode 2 précédemment émise est écoulé 254". Dans ce cas, l'interrogateur passe dans le deuxième état 204 pour ré émettre une interrogation en mode 1. De cette manière, une alternance entre émission en mode 1 et émission en mode 2 est obtenue.

Le procédé selon l'invention est applicable à des antennes reliées au module IFF fonctionnant en mode pointé ou dans en mode balayage. Par ailleurs, le procédé selon l'invention peut s'appliquer à un transpondeur-interrogateur, apte à émettre des interrogations, mais aussi à répondre à des interrogations émises par des interrogateurs distants.

Un avantage du procédé selon l'invention est qu'il peut être mis en oeuvre sur des équipements existants sans requérir de transformation matérielle lourde. En effet, après avoir effectué les modifications logicielles nécessaires sur le module IFF, il suffit de relier le module IFF et le terminal de radiocommunications par un simple câble transportant un signal d'enveloppe des émissions du terminal, ce qui de plus le rend particulièrement bien adapté aux plates-formes exiguës compte tenu du faible espace requis pour faire passer ce câble.

## Revendications

1. Procédé de contrôle d'un interrogateur d'identification dont l'antenne subit un couplage électromagnétique préjudiciable avec une autre antenne reliée à un terminal de radiocommunications émetteur d'impulsions, une interrogation émise par ledit interrogateur prenant la forme d'impulsions, le procédé comprenant au moins les étapes suivantes :
■ transmettre à l'interrogateur un signal d'information (361) indiquant au moins les périodes pendant lesquelles une impulsion peut être émise par le terminal de radiocommunications ;
■ contrôler l'émission d'interrogations ou l'écoute de réponses par l'interrogateur en fonction de l'état dudit signal d'information (361),
le procédé étant **caractérisé en ce que** si, pendant que l'émission d'une impulsion par l'interrogateur est en cours (204), l'émission d'un train d'impulsions par le terminal de radiocommunications débute (355) et que cette émission par ledit terminal se termine (358) après la fin (357) de l'émission de l'impulsion par l'interrogateur, alors l'émission d'une autre impulsion par l'interrogateur est demandée.

2. Procédé de contrôle selon la revendication 1, **caractérisé en ce que** le signal d'information (361) est un signal à deux états formant une enveloppe des émissions par le terminal, un état « émission » (360) indiquant l'émission d'un train d'impulsions par le terminal de radiocommunications et un état « silence » indiquant qu'aucune impulsion n'est émise par ledit terminal.

3. Procédé de contrôle selon la revendication 2, **caractérisé en ce que** si une émission d'impulsions est demandée à l'interrogateur pendant que le signal d'information indique l'émission d'un train d'impulsions par le terminal de radiocommunications, attendre (302) la fin de l'émission dudit train d'impulsions pour déclencher l'émission de la rafale d'impulsions par l'interrogateur.

4. Procédé de contrôle selon l'une des revendications 2 ou 3, **caractérisé en ce que**, pendant la phase d'écoute (206) de l'arrivée de messages de réponses, si l'émission d'un train d'impulsions par le terminal de radiocommunications débute (359),
■ identifier comme peu fiables ou supprimer les éventuelles réponses reçues par l'interrogateur pendant la dernière période d'écoute,
■ attendre (308) la fin de l'émission du train d'impulsions par le terminal de radiocommunications,
■ déclencher l'émission d'une nouvelle impulsion d'interrogation par l'interrogateur.

5. Procédé de contrôle selon la revendication 2, **caractérisé en ce que** l'écoute par l'interrogateur de l'arrivée de messages de réception est inhibée pendant que le signal d'enveloppe est à l'état « émission ».

6. Procédé de contrôle selon l'une des revendications précédentes, **caractérisé en ce que** les impulsions sont émises par le terminal sur une bande de fréquence comprise entre 960 MHz et 1215 MHz, la fréquence des impulsions à recevoir par l'antenne du module étant égale à 1090 MHz.

7. Procédé de contrôle selon l'une des revendications précédentes, **caractérisé en ce que** le terminal de radiocommunications est un terminal MIDS, le signal d'enveloppe étant le signal BTDMAMTR fourni par ledit terminal MIDS.

8. Système comprenant un terminal de radiocommunications émetteurs d'impulsions relié à au moins une première antenne (102) et un interrogateur relié à au moins une seconde antenne (103), lesdites antennes subissant un couplage électromagnétique mutuel, **caractérisé en ce qu'**un câble transportant un signal d'enveloppe de l'émission des impulsions du terminal de radiocommunications est connecté au dit interrogateur, lequel interrogateur mettant en oeuvre le procédé selon l'une des revendications précédentes.

9. Système selon la revendication 8, **caractérisé en ce que** l'interrogateur d'identification est un interrogateur IFF.

## Patentansprüche

1. Verfahren zum Steuern eines Identifikationsinterrogators, dessen Antenne eine schädliche elektromagnetische Kopplung mit einer anderen Antenne erfährt, die mit einem Impulse emittierenden Funkkommunikationsendgerät verbunden ist, wobei eine von dem Interrogator emittierte Abfrage die Form von Impulsen hat, wobei das Verfahren wenigstens die folgenden Schritte beinhaltet:
■ Senden eines Informationssignals (361) zu dem Interrogator, das wenigstens die Perioden anzeigt, während denen ein Impuls von dem Funkkommunikationsendgerät emittiert werden kann;
■ Steuern der Emission von Abfragen oder des Horchens auf Antworten durch den Interrogator in Abhängigkeit vom Status des Informationssignals (361),
wobei das Verfahren **dadurch gekennzeichnet ist, dass**, wenn während der Emission (204) eines Impulses durch den Interrogator das Emittieren einer Impulsfolge durch das Funkkommunikationsendgerät beginnt (355) und diese Emission durch das Endgerät nach dem Ende (357) der Emission des Impulses durch den Interrogator endet (358), die Emission eines anderen Impulses durch den Interrogator angefordert wird.

2. Steuerverfahren nach Anspruch 1, **dadurch gekennzeichnet, dass** das Informationssignal (361) ein Zweizustandssignal ist, das eine Hüllkurve von Emissionen durch das Endgerät bildet, wobei ein "Emissions"-Zustand (360) die Emission einer Impulsfolge durch das Funkkommunikationsendgerät anzeigt und ein "Ruhe"-Zustand anzeigt, dass kein Impuls von dem Endgerät emittiert wurde.

3. Steuerverfahren nach Anspruch 2, **dadurch gekennzeichnet, dass** es, wenn eine Emission von Impulsen vom Interrogator angefordert wird, während das Informationssignal die Emission einer Impulsfolge durch das Funkkommunikationsendgerät anzeigt, auf das Ende der Emission der Impulsfolge wartet (302), bevor es die Emission des Impulsbündels durch den Interrogator auslöst.

4. Steuerverfahren nach einem der Ansprüche 2 oder 3, **gekennzeichnet durch**, in der Phase (206) des Horchens auf die Ankunft von Antwortnachrichten, wenn die Emission einer Impulsfolge **durch** das Funkkommunikationsendgerät beginnt (359):
■ Identifizieren als wenig zuverlässig oder Löschen von während der letzten Horchperiode von dem Interrogator eventuell empfangenen Antworten;
■ Warten (308) auf das Ende der Emission der Impulsfolge **durch** das Funkkommunikationsendgerät;
■ Auslösen der Emission eines neuen Abfrageimpulses **durch** den Interrogator.

5. Steuerverfahren nach Anspruch 2, **dadurch gekennzeichnet, dass** das Horchen, durch den Interrogator, auf die Ankunft von Empfangsnachrichten gesperrt wird, während das Hüllkurvensignal im "Emissions"-Zustand ist.

6. Steuerverfahren nach einem der vorherigen Ansprüche, **dadurch gekennzeichnet, dass** die Impulse von dem Endgerät in einem Frequenzband zwischen 960 MHz und 1215 MHz emittiert werden, wobei die Frequenz der von der Antenne des Moduls zu empfangenden Impulse 1090 MHz beträgt.

7. Steuerverfahren nach einem der vorherigen Ansprüche, **dadurch gekennzeichnet, dass** das Funkkommunikationsendgerät ein MIDS-Endgerät ist, wobei das Hüllkurvensignal das vom MIDS-Endgerät gelieferte BTDMAMTR-Signal ist.

8. System, das ein Impulse emittierendes Funkkommunikationsendgerät umfasst, das mit wenigstens einer ersten Antenne (102) und einem mit wenigstens einer zweiten Antenne (103) verbundenen Interrogator verbunden ist, wobei die Antennen eine gegenseitige elektromagnetische Kopplung erfahren, **dadurch gekennzeichnet, dass** ein ein Hüllkurvensignal der Emission der Impulse von dem Funkkommunikationsendgerät führendes Kabel mit dem Interrogator verbunden ist, wobei der Interrogator das Verfahren nach einem der vorherigen Ansprüche implementiert.

9. System nach Anspruch 8, **dadurch gekennzeichnet, dass** der Identifikationsinterrogator ein IFF-Interrogator ist.

## Claims

1. A method for controlling an identification interrogator, the antenna of which experiences harmful electromagnetic coupling with another antenna connected to a pulse-emitting radiocommunications terminal, with a poll emitted by said interrogator taking the form of pulses, said method comprising at least the following steps:
■ transmitting an information signal (361) to said interrogator, indicating at least the periods during which a pulse can be emitted by said radiocommunications terminal;
■ controlling the emission of polls or the listening for responses by said interrogator as a function of the status of said information signal (361),
said method being **characterised in that** if, when the emission of a pulse by said interrogator is in progress (204), the emission of a pulse train by said radiocommunications terminal starts (355) and said emission by said terminal terminates (358) after the end (357) of said emission of the pulse by said interrogator, then the emission of another pulse by said interrogator is requested.

2. The control method according to claim 1, **characterised in that** said information signal (361) is a two-state signal forming an envelope of emissions by said terminal, with an "emission" state (360) indicating the emission of a pulse train by said radiocommunications terminal and a "silence" state indicating that no pulse has been emitted by said terminal.

3. The control method according to claim 2, **characterised in that**, if an emission of pulses is requested from said interrogator whilst said information signal indicates the emission of a pulse train by said radio communications terminal, said method waits (302) for the end of the emission of said pulse train before triggering the emission of the burst of pulses by said interrogator.

4. The control method according to any of claims 2 or 3, **characterised in that**, during the phase (206) of listening for the arrival of response messages, if the emission of a pulse train by said radiocommunications terminal begins (359), said method comprises:
■ identifying as unreliable or deleting any responses received by said interrogator during the last listening period;
■ waiting (308) for the end of the emission of the pulse train by said radiocommunications terminal;
■ triggering the emission of a new polling pulse by said interrogator.

5. The control method according to claim 2, **characterised in that** the listening by said interrogator for the arrival of reception messages is inhibited whilst the envelope signal is in the "emission" state.

6. The control method according to any one of the preceding claims, **characterised in that** the pulses are emitted by said terminal on a frequency band from 960 MHz to 1,215 MHz, with the frequency of the pulses to be received by the antenna of the module being 1,090 MHz.

7. The control method according to any one of the preceding claims, **characterised in that** said radiocommunications terminal is an MIDS terminal, with said envelope signal being the BTDMAMTR signal supplied by said MIDS terminal.

8. A system comprising a pulse-emitting radiocommunications terminal connected to at least one first antenna (102) and an interrogator connected to at least one second antenna (103), said antennae experiencing mutual electromagnetic coupling, **characterised in that** a cable carrying an envelope signal of the emission of the pulses from said radiocommunications terminal is connected to said interrogator, which interrogator implements the method according to any one of the preceding claims.

9. The system according to claim 8, **characterised in that** the identification interrogator is an IFF interrogator.
